# FASCICULE DE BREVET EUROPEEN

(11) **EP 1 379 094 B1**
(45) Date de publication et mention de la délivrance du brevet: **11.08.2010**
(21) Numéro de dépôt: 03291607.4
(22) Date de dépôt: 30.06.2003
(51) Int. Cl.: H04W 88/02

(54) **Procédé de verouillage d'un terminal mobile de telecommunication**
Verriegelungsverfahren für ein mobiles Kommunikationsendegerät
Method for locking a mobile communication terminal

(30) Priorité: 04.07.2002 FR 0208372
(43) Date de publication de la demande: 07.01.2004
(73) Titulaire: IPG Electronics 504 Limited, St Peter Port Guernsey GY1 3QL (GB)
(72) Inventeur: Hubbe, Pascal, 75014 Paris (FR); Sykes, Francis, 75014 Paris (FR)
(74) Mandataire: Talbot-Ponsonby, Clare Josephine

(56) Documents cités:
- EP-A- 0 602 319
- EP-A- 0 607 767
- EP-A- 1 047 277
- EP-A- 1 170 969
- FR-A- 2 791 509
- US-A- 5 913 175

## Description

La présente invention concerne un procédé de verrouillage d'un terminal mobile de télécommunication. Elle concerne également un terminal mobile comprenant des moyens de mise en oeuvre du procédé de verrouillage.

Véritable phénomène de société, la téléphonie mobile fait partie de notre environnement quotidien avec un parc mondial qui se compte en centaines de millions de téléphones mobiles. On rappelle que ces terminaux de télécommunication ou téléphones mobiles comportent généralement une carte à puce classiquement appelée carte (U)SIM (Subscriber Identity Module).

La carte (U)SIM contient des informations non modifiables par l'utilisateur qui permettent de l'identifier et d'identifier l'abonné par exemple le numéro d'identification du circuit intégré de la carte ICCid et le numéro d'abonné au réseau de téléphonie mobile international IMSI (International Mobile Subscriber Identity).

La carte (U)SIM est délivrée au moment de l'acquisition d'un téléphone mobile à un abonné. Cette carte est mise en place dans le téléphone mobile et le rend opérationnel dés que l'utilisateur rentre un code personnel d'identification code PIN (Personnal Identifier Number) à partir du clavier du téléphone.

Ce code PIN est stocké de manière sécurisée par la carte et n'est connu que de l'utilisateur. A chaque mise en fonction du téléphone, le code PIN est demandé à l'utilisateur par la carte et contrôlé par cette dernière.

La carte (U)SIM comporte en mémoire, un programme de communication correspondant au protocole de communication avec les terminaux de téléphonie mobile du standard GSM TS11-11 et 3GPP (TS 31.101).

La carte (U)SIM comporte également dans une mémoire de programme un ou plusieurs programmes d'application, l'application téléphonie n'étant plus la seule application prévue puisque d'autres applications telles que le commerce électronique sont possibles.

Le terminal mobile d'un abonné Ao est par conséquent équipé d'un lecteur de carte à puce lui permettant des communications avec la carte (U)SIM Co. Ce lecteur comprend une interface homme-machine pour permettre des échanges entre l'utilisateur et la carte à travers le terminal. A cette fin, l'utilisateur a à sa disposition un menu qui se déroule sur l'écran du terminal et le clavier du terminal.

Le terminal est également équipé d'autres circuits électroniques qu'il n'est pas nécessaire de détailler pour la compréhension de la suite tels que des moyens de mémorisation de programmes et de données ainsi que des moyens de communications avec le ou les réseaux de télécommunication.

Le problème posé va être développé dans ce qui suit.

L'accroissement du marché de la téléphonie mobile fait apparaître un marché parallèle de téléphones mobiles volés grandissant.

Un voleur qui s'empare du téléphone d'une autre personne peut utiliser ce téléphone si ce dernier est actif jusqu'à épuisement de la batterie. Après quoi, il ne lui est pas possible de l'utiliser tel quel sans la connaissance du code PIN du titulaire. Cependant il lui est tout à fait possible malheureusement de mettre à bord une autre carte (U)SIM. Ainsi, le vol d'un téléphone de technologie récente peut permettre le remplacement d'un téléphone ancien. Si bien qu'un commerce de téléphones volés existe car il permet à des personnes faisant l'acquisition de ces téléphones de récupérer par exemple la carte SIM d'un téléphone ancien modèle pour la mettre dans le nouveau modèle (acheté à un voleur ou volé) ou bien d'installer dans un téléphone volé une carte à puce correspondant à un autre abonnement.

Ce marché est possible dés lors qu'il est possible d'utiliser un téléphone avec une autre carte SIM que la carte initiale, autrement dit avec un autre abonnement.

Une solution connue à ce problème, consiste à verrouiller le fonctionnement du mobile avec la carte (U)SIM avec laquelle il a été livré dans le cadre d'un achat groupé (poste et abonnement (Pack)). Ce mécanisme est défini par l'ETSI et s'appelle SIM Lock. Il protège l'opérateur contre l'utilisation d'un téléphone avec un abonnement souscrit auprès d'un autre opérateur. Cette solution est gérée par l'opérateur de télécommunication pour une durée limitée. Le marché étant arrivé à maturité les consommateurs achètent des terminaux récents pour les utiliser avec l'abonnement (SIM) dont ils disposent. De façon pratique, un abonné qui vient de se faire voler son téléphone, appelle son opérateur de télécommunication pour signaler ce vol et l'opérateur verrouille l'utilisation de sa carte (U)SIM. On voit que cette solution protège l'abonné contre l'utilisation de son abonnement (encore faudrait-il que son code PIN, si la fonction est activée, soit découvert) et évite à l'opérateur des litiges concernant des refus de paiement.

Cette solution ne permet pas de remédier au problème du vol, puisqu'un téléphone volé peut être utilisé.

On connait du document EP 1 047 277 un procédé permettant le verrouillage d'un terminal mobile lorsqu'une carte SIM différente de celle qui a permis antérieurement un accès au réseau de téléphonie est insérée, et que l'utilisateur ne fournit pas le bon code secret qui lui est demandé, ce code secret étant lié au terminal mobile.

La présente invention a pour but de remédier à cette situation.

La solution proposée repose sur le verrouillage du terminal par le terminal lui-même après que ce dernier ait détecté qu'une carte insérée dans le terminal ne correspond pas à la carte d'abonnement initiale.

La présente invention a donc pour objet un procédé de verrouillage d'un terminal mobile pour réseau de télécommunication tel que défini dans la revendication 1.

Selon une variante de réalisation, l'information d'identification unique d'abonné est le numéro d'abonné au réseau de téléphonie mobile international IMSI (International Mobile Subscriber Identifier).

Selon une autre variante l'information d'identification unique d'abonné est le numéro d'identification du circuit intégré de la carte ICCid.

Selon une autre caractéristique, le code est calculé au moyen d'une fonction injective telle qu'un algorithme de cryptographique de type algorithme DES ou 3DES (de l'anglais Data Encryption Standard)) ou fonction de hachage.

L'invention a également pour objet, un terminal mobile de télécommunication principalement caractérisé en ce qu'il comprend en mémoire non volatile, un programme apte à mettre en oeuvre le procédé décrit ci-après.

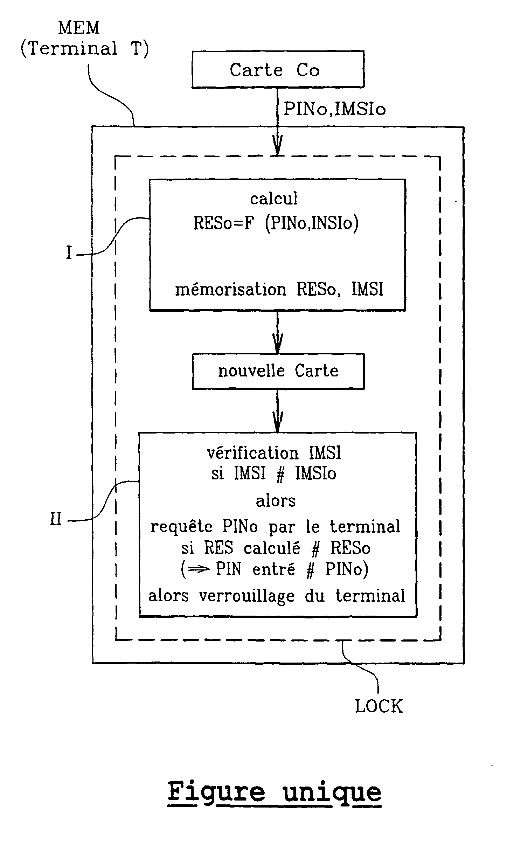

D'autres particularités et avantages de l'invention apparaîtront clairement à la lecture de la description suivante qui est donnée à titre d'exemple non limitatif et en regard de la figure unique qui illustre le procédé mis en oeuvre par un programme LOCK chargé dans le terminal.

Le programme LOCK destiné à mettre en oeuvre le procédé selon l'invention est enregistré en mémoire MEM de programme du terminal T. La fonction « Lock » correspondante sera proposée à l'utilisateur qui pourra l'activer s'il le désire. A cette fin la fonction « Lock » apparaîtra dans le menu affiché à l'écran du terminal.

Le programme comporte une première étape I mise en oeuvre à la première insertion d'une carte (U)SIM, Co.

Cette étape comprend le calcul du code RES tel que RES = F(PINo, IMSIo). La fonction F est une fonction de cryptographie injective, c'est-à-dire que F⁻¹ (RES) =(PINo, IMSIo) ou permettant de s'assurer que le code PIN utilisé est le bon.

Le numéro d'identification PINo et le numéro d'abonné au réseau de téléphonie mobile international IMSIo sont les données d'entrée du calcul opéré par ce programme dans cet exemple.

En fait le numéro IMSIo est un exemple, il pourrait être remplacé par toute information unique et non modifiable caractéristique de la carte. On pourrait prendre par exemple le numéro d'identification du circuit intégré de la carte ICCid.

Cette étape I comprend également la mémorisation du code obtenu RES et le numéro IMSIo.

Puis à chaque insertion d'une nouvelle carte SIM ce qui est illustré par l'étape II,
le programme vérifie le numéro IMSI en la comparant avec numéro déjà enregistré :
- si ce numéro (IMSI) est différent, alors le programme requiert le numéro personnel d'identification PINo de la première carte et vérifie à partir des données mémorisées que le bon code PIN a été utilisé,
- si ce numéro (code PIN) est différent le terminal verrouille son fonctionnement, sinon il continue à fonctionner.

Cette disposition va donc empêcher l'utilisation d'un terminal dés lors que le code PINo de la première carte (U)SIM n'est pas entré par l'utilisateur.

La fonction F est une fonction injective (c'est-à-dire que F⁻¹(RES) =(PINo,IMSIo)), elle pourra être par exemple une fonction de hachage (HASH fonction) ou un algorithme de cryptographie tel que le DES ou 3DES.

C'est le terminal qui a dans une de ces mémoires non volatiles le programme de mise en oeuvre des étapes qui viennent d'être décrites assurant la fonction de verrouillage. C'est donc avantageusement le terminal qui demande à l'utilisateur de saisir son code PIN. Cette étape reste par conséquent indépendante du mécanisme classique de saisie du code PIN effectué à la demande de la carte (U)SIM lors de la mise sous tension du terminal.

## Revendications

1. Procédé de verrouillage d'un terminal mobile pour réseau de télécommunication, le terminal comprenant un lecteur de carte d'identification d'abonné de type carte SIM qui comporte au moins une information d'identification unique d'abonné (IMSI), principalement **caractérisé en ce qu'**il comprend les étapes successives suivantes au niveau du terminal:
- A la première insertion d'une première carte d'abonné de type carte SIM, calculer un premier code (RESo) à partir d'au moins une information d'identification unique d'abonné (IMSIo) contenue dans la première carte et d'un numéro personnel d'identification (PINo) de l'utilisateur de cette première carte, et mémoriser le premier code (RESo) et ladite information d'identification unique d'abonné (IMSIo),
- détecter si une nouvelle carte est insérée en vérifiant qu'une information d'identification unique d'abonné (IMSI) contenue dans la carte insérée est différente de l'information unique d'abonné mémorisée à l'étape précédente, demander dans ce cas à l'utilisateur de saisir le numéro personnel d'identification (PINo) de l'utilisateur de la première carte, calculer un second code (RES)à partir de l'information unique d'abonné mémorisée à l'étape précédente et du numéro personnel d'identification (PINo) saisi pour vérifier s'il est en correspondance avec le premier code (RESo) mémorisé,
- verrouiller le fonctionnement du terminal en cas de non correspondance.

2. Procédé de verrouillage d'un terminal mobile pour réseau de télécommunication selon le revendication 1, **caractérisé en ce que** ladite information d'identification unique d'abonné est le numéro d'abonné au réseau de téléphonie mobile international IMSI (International Mobile Subscriber Identifier).

3. Procédé de verrouillage d'un terminal mobile pour réseau de télécommunication selon la revendication 1, **caractérisé en ce que** ladite information d'identification unique d'abonné est le numéro d'identification du circuit intégré de la carte ICCid.

4. Procédé de verrouillage d'un terminal mobile pour réseau de télécommunication selon l'une quelconque des revendications précédentes, **caractérisé en ce que** le premier et le second codes sont calculés au moyen d'une fonction injective telle qu'algorithme cryptographique de type algorithme DES ou 3DES, ou d'une fonction de hachage.

5. Terminal mobile de télécommunication, **caractérisé en ce qu'**il comprend en mémoire non volatile, un programme apte à mettre en oeuvre le procédé selon l'une quelconque des revendications précédentes.

## Claims

1. Procedure for locking a mobile terminal for a telecommunications network, the terminal including a SIM card-type subscriber identifier card reader that includes at least one piece of unique subscriber identifier information (IMSI), principally **characterised in that** it includes the following successive steps at the terminal level:
- Upon first insertion of a first subscriber card of the SIM card type, calculating a first code (RESo) based on at least one piece of unique subscriber identifier information (IMSIo) contained in the first card and a personal identification number (PINo) for the user of this first card, and storing the first code (RESo) and said unique subscriber identifier information (IMSIo),
- detecting whether a new card is inserted by verifying that the piece of unique subscriber identifier information (IMSI) contained in the inserted card is different from the unique subscriber information stored in the preceding step, and in this case, requesting the user to enter the personal identification number (PINo) of the user of the first card, calculating a second code (RES) based on the unique subscriber information stored in the preceding step and on the personal identification number (PIN) entered in order to verify whether it corresponds to the first code (RESo) stored.
- locking the terminal functions in the case that it does not correspond.

2. Procedure for locking a mobile terminal for a telecommunications network according to claim 1, **characterised in that** said unique subscriber identifier information is the International Mobile Subscriber Identifier (IMSI) number.

3. Procedure for locking a mobile terminal for a telecommunications network according to claim 1, **characterised in that** said unique subscriber identifier information is the integrated circuit card identifier (ICCid) number of the card.

4. Procedure for locking a mobile terminal for a telecommunications network according to any one of the preceding claims, **characterised in that** the first and second codes are calculated by means of an injective function such as a cryptographic algorithm of the DES or 3DES algorithm type, or of a hash function.

5. Mobile telecommunications terminal, **characterised in that** it includes, in non-volatile memory, a program suitable for implementing the procedure according to any one of the preceding claims.

## Patentansprüche

1. Verfahren zum Sperren eines mobilen Endgeräts für Telekommunikationsnetzwerke, wobei das Endgerät ein Lesegerät für eine Teilnehmeridentifizierungskarte nach Art einer SIM-Karte umfasst, die mindestens eine teilnehmerspezifische Identifizierungsinformation (IMSI) umfasst, hauptsächlich **dadurch gekennzeichnet, dass** es die folgenden aufeinanderfolgenden Schritte am Endgerät umfasst:
- beim ersten Einfügen einer ersten Teilnehmerkarte nach Art einer SIM-Karte, Berechnen eines ersten Codes (RESo) aus mindestens einer teilnehmerspezifischen Identifizierungsinformation (IMSIo), die in der ersten Karte enthalten ist, und aus einer persönlichen Kennung (PINo) des Benutzers dieser ersten Karte, und Speichern des ersten Codes (RESo) und der teilnehmerspezifischen Identifizierungsinformation (IMSIo),
- Erfassen, ob eine neue Karte eingefügt ist, indem überprüft wird, dass eine teilnehmerspezifische Identifizierungsinformation (IMSI), die in der eingefügten Karte enthalten ist, anders ist als die teilnehmerspezifische Information, die im vorhergehenden Schritt gespeichert wurde, in diesem Fall Auffordern des Benutzers, die persönliche Kennung (PINo) des Benutzers der ersten Karte einzugeben, Berechnen eines zweiten Codes (RES) aus der teilnehmerspezifischen Information, die im vorhergehenden Schritt gespeichert wurde, und aus der eingegebenen persönlichen Kennung (PINo), um zu überprüfen, ob er mit dem ersten gespeicherten Code (RESo) übereinstimmt,
- Sperren des Betriebs des Endgeräts im Falle einer Nichtübereinstimmung.

2. Verfahren zum Sperren eines mobilen Endgeräts für Telekommunikationsnetzwerke nach Anspruch 1, **dadurch gekennzeichnet, dass** die teilnehmerspezifische Identifizierungsinformation die internationale Teilnehmernummer am Mobiltelefonnetz IMSI (International Mobile Subscriber Identifier) ist.

3. Verfahren zum Sperren eines mobilen Endgeräts für Telekommunikationsnetzwerke nach Anspruch 1, **dadurch gekennzeichnet, dass** die teilnehmerspezifische Identifizierungsinformation die Kennung der integrierten Schaltung der Karte ICCid ist.

4. Verfahren zum Sperren eines mobilen Endgeräts für Telekommunikationsnetzwerke nach einem der vorhergehenden Ansprüche, **dadurch gekennzeichnet, dass** der erste und der zweite Code mittels einer injektiven Funktion, wie etwa eines Verschlüsselungsalgorithmus DES oder 3DES, oder einer Hash-Funktion berechnet werden.

5. Mobiles Telekommunikationsendgerät, **dadurch gekennzeichnet, dass** es im nichtflüchtigen Speicher ein Programm umfasst, das dazu geeignet ist, das Verfahren nach einem der vorhergehenden Ansprüche umzusetzen.
